# FASCICULE DE BREVET EUROPEEN

(11) **EP 1 849 343 B1**
(45) Date de publication et mention de la délivrance du brevet: **05.11.2008**
(21) Numéro de dépôt: 07290498.0
(22) Date de dépôt: 23.04.2007
(51) Int. Cl.: A01B 33/08

(54) **Engin de travail du sol à rotor et à limiteurs de couple intégrés dans le rotor.**
Bodenbearbeitungsmaschine mit Rotor und integrierten Drehmomentbegrenzern im Rotor
Cultivation device with a rotor and torque limiters integrated in the rotor

(30) Priorité: 24.04.2006 FR 0651437
(43) Date de publication de la demande: 31.10.2007
(73) Titulaire: SAS Dairon, 72230 Mulsanne (FR)
(72) Inventeur: Dairon, Michel Maurice, 72150 Pruille L'Eguille (FR); Loyer, José Alain, 72510 Mansigne (FR)
(74) Mandataire: Thinat, Michel

(56) Documents cités:
- FR-A- 1 253 907
- FR-A- 2 329 178
- FR-A1- 2 643 778
- US-A- 4 044 841

## Description

La présente invention concerne un engin de travail du sol, tel qu'un malaxeur, à rotor semi-porté d'axe horizontal transversal à la direction d'avancement du tracteur tractant cet engin.

Le rotor est entraîné en sens inverse de celui des roues du tracteur et est pourvu de plusieurs disques à lames destinées à défoncer le sol.

On connaît selon FR-A-2643778 un malaxeur à rotor à répartition automatique du couple d'entraînement à chaque extrémité du rotor. Selon ce malaxeur connu, la transmission de puissance à chaque extrémité du rotor s'effectue par au moins une chaîne d'entraînement d'un pignon coaxial au rotor et un limiteur de couple est disposé à l'extérieur du rotor en étant interposé entre ce dernier et le pignon. Chacun des deux limiteurs de couple est réglé à une même valeur limite de couple, la somme des deux valeurs limites de couple étant légèrement supérieure au couple nécessaire nominal d'entraînement du rotor. En outre, un réducteur planétaire est logé dans le rotor.

Selon cette conception connue, lorsque le rotor se bloque accidentellement lors du travail de la terre, le réducteur planétaire s'immobilise en même temps que le rotor avec pour effet de créer un surcouple au niveau de ce réducteur susceptible de casser la denture des différents éléments constitutifs du réducteur.

La présente invention a pour but d'éliminer l'inconvénient ci-dessus en proposant des moyens permettant de protéger efficacement le réducteur planétaire du rotor lorsque ce dernier se bloque lors du travail de la terre.

A cet effet, l'invention a pour objet un engin de travail du sol, tel qu'un malaxeur, comprenant un rotor en forme générale de cylindre creux portant des outils de travail du sol et dont chacune des extrémités est entraînée par au moins une chaîne de transmission en prise avec un pignon externe couplé coaxialement au rotor, un limiteur de couple interposé entre le rotor et chacun des deux pignons, chacun des deux limiteurs de couple étant réglé à une même valeur limite de couple telle que la somme des deux valeurs soit légèrement supérieure au couple nominal d'entraînement du rotor, et un réducteur planétaire logé dans le rotor, caractérisé en ce que chaque limiteur de couple est logé dans le rotor et comprend deux plateaux d'embrayage portés par un arbre à pignon externe d'entraînement du rotor et pressés élastiquement en engagement par friction contre un disque d'embrayage de part et d'autre de celui-ci, le disque d'embrayage étant solidaire du rotor par l'intermédiaire d'un accouplement élastique.

L'un des plateaux d'embrayage est solidaire en rotation du porte-satellite du réducteur planétaire dont les pignons planétaires sont entraînés par un pignon interne de l'arbre du rotor et en engrènement dans une couronne fixe de planétaire.

Les deux plateaux d'embrayage sont pressés contre le disque d'embrayage par une rondelle Belleville pressée contre l'autre plateau d'embrayage par des vis traversant des perçages lisses de l'autre plateau, le disque d'embrayage et l'accouplement élastique, les vis étant ancrées dans des trous taraudés du plateau d'embrayage solidaire du porte-satellite.

L'accouplement élastique est solidarisé coaxialement d'une part au rotor et d'autre part au disque d'embrayage à un côté de ce dernier par des boulons axiaux de fixation.

De préférence, l'accouplement élastique est en forme générale de couronne plate constituée par une succession de lamelles élastiques rectilignes métalliques, de préférence en acier, régulièrement espacées.

Chaque arbre d'entraînement du rotor est monté à rotation à sa partie d'extrémité portant le pignon externe d'entraînement dans un palier cylindrique de support solidaire d'un flasque ou bras latéral de support du rotor.

La couronne du réducteur planétaire est solidaire du palier cylindrique de support de l'arbre d'entraînement du rotor.

Chaque extrémité du rotor est montée à rotation au flasque ou bras de support par un roulement à billes.

Les plateaux d'embrayage, le disque d'embrayage et l'accouplement élastique sont disposés transversalement à l'arbre correspondant d'entraînement du rotor.

Les deux plateaux d'embrayage sont montés à rotation sur l'arbre correspondant d'entraînement du rotor par des roulements à billes.

Le plateau d'embrayage est solidaire du porte-satellite par des vis axiales de fixation et les deux arbres d'entraînement du rotor sont coaxiaux.

L'accouplement élastique autorise un désalignement du rotor suivant les trois axes orthogonaux de l'espace.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

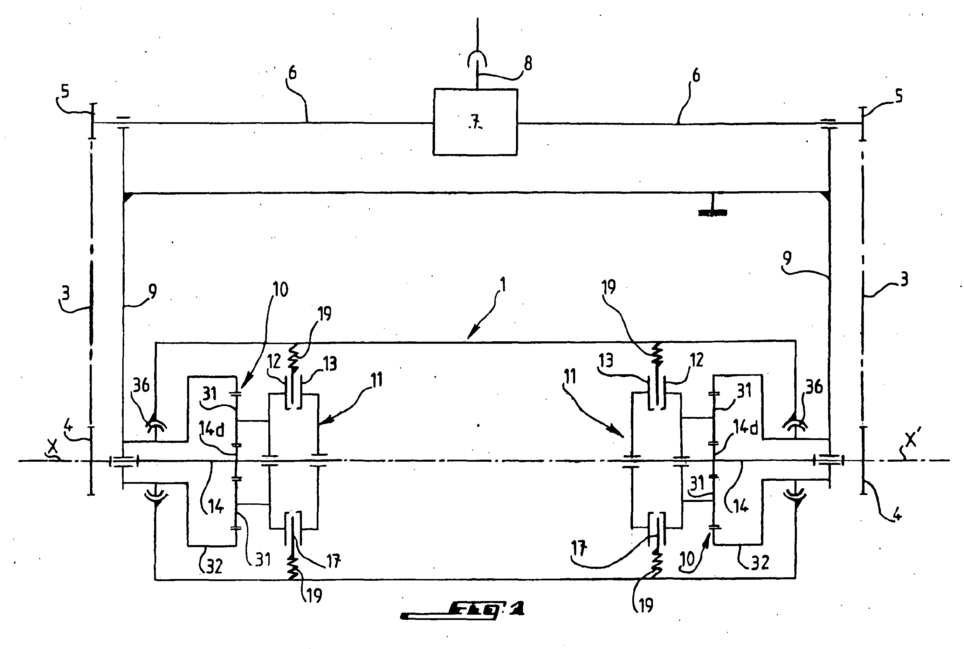

- la figure 1 est une vue de dessus schématique d'un rotor conforme à l'invention ;
- la figure 2 est une vue schématique semblable à celle de la figure 1 et représentant une position désalignée du rotor ;
- la figure 3 est une vue en perspective éclatée de l'un des limiteurs de couple de l'invention logés dans le rotor ; et
- la figure 4 est une vue en coupe longitudinale du limiteur de couple de l'invention.

En se reportant aux figures, la référence 1 désigne un rotor d'un engin de travail du sol, tel que par exemple un malaxeur, portant sur sa périphérie externe des lames 2 permettant de défoncer le sol sur une profondeur déterminée.

Le rotor 1 est entraîné à ses deux extrémités par une transmission comprenant deux chaînes latérales externes 3 en prise d'une part avec deux pignons externes 4 coaxiaux à l'axe longitudinal X-X' du rotor et d'autre part avec deux pignons 5 chacun solidaire d'un arbre de renvoi 6. Les deux arbres de renvoi 6 s'étendent coaxialement et sont sensiblement parallèles à l'axe longitudinal de rotation X-X' du rotor 1. Ces arbres 6 sont disposés de part et d'autre d'un boîtier double de renvoi 7 dont l'arbre d'entrée 8 est entraîné à partir de la prise de force d'un tracteur par une transmission à joint de Cardan.

Le rotor 1 est supporté à rotation à ses deux extrémités respectivement par deux flasques ou bras latéraux 9 sur lesquels tournent respectivement les deux arbres de renvoi 6.

Un réducteur planétaire 10 est logé dans le cylindre creux du rotor 1 comme on le verra ultérieurement.

Un limiteur de couple 11 est interposé entre chaque pignon 4 et le rotor 1, chacun des deux limiteurs de couple étant réglé à une même valeur limite de couple telle que la somme des deux valeurs soit légèrement supérieure au couple nominal d'entraînement du rotor 1.

Selon l'invention, chacun des deux limiteurs de couple 11 est logé dans le rotor 1 et comprend deux plateaux circulaires d'embrayage 12, 13 portés par une partie d'extrémité 14a d'un arbre 14 d'entraînement du rotor 1 coaxial à l'axe longitudinal X-X' de celui-ci et qui est monté à rotation à sa partie d'extrémité opposée 14b dans un palier cylindrique de support 15 solidaire de la face interne du flasque associé 9 située en regard de l'extrémité correspondante du rotor 1 du flasque associé 9. Chaque arbre 14 est monté à rotation dans le palier 15 par l'intermédiaire de deux roulements à billes 16 dont l'un est logé dans le palier 15 et l'autre, adjacent au pignon externe 4 porté par l'extrémité 14c de l'arbre 14, est monté dans le flasque correspondant 9.

Chaque limiteur de couple 11 comprend en outre un disque d'embrayage 17 de forme générale annulaire disposé concentriquement à l'arbre 14 et sur les deux faces latérales duquel sont pressés élastiquement en engagement par friction respectivement les deux plateaux d'embrayage 12, 13 qui, avec le disque d'embrayage 17, sont disposés perpendiculairement à l'arbre 14. Chacun des deux plateaux d'embrayage 12, 13 porte sur sa face en appui sur le disque d'embrayage 17 des pastilles de friction en carbure 18.

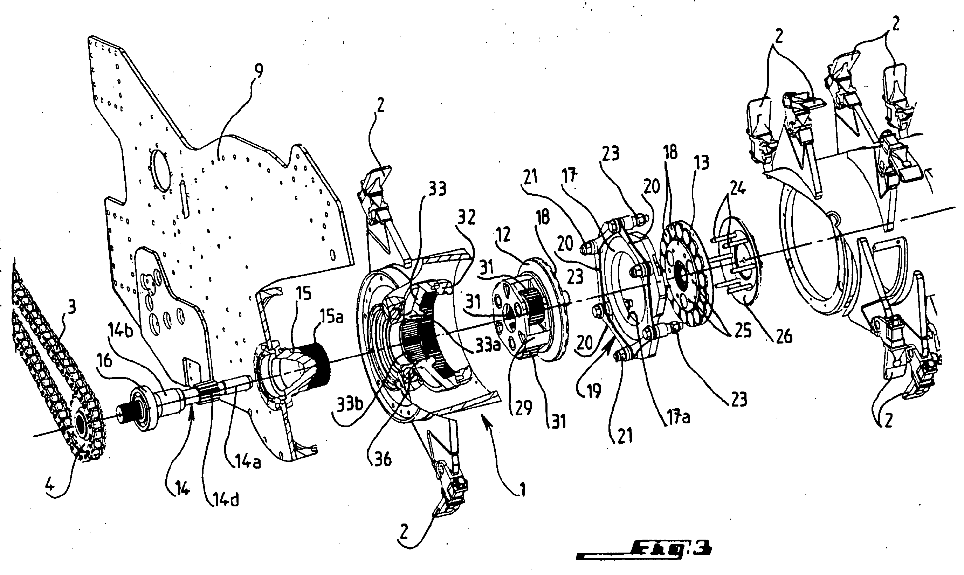

Le disque d'embrayage 17 est relié à la face interne de la paroi latérale du rotor 1 par l'intermédiaire d'un accouplement élastique 19 qui peut être constitué par une couronne ou membrane annulaire plate s'étendant normalement perpendiculairement à l'arbre 14 et formée d'une succession de lamelles élastiques sensiblement rectilignes et régulièrement espacées 20. Les lamelles 20 peuvent être réalisés en acier. L'accouplement élastique 19 peut être réalisé par tout autre type classique d'accouplement élastique, par exemple du genre comportant des silentblocs. Comme cela ressort de la figure 3, l'accouplement élastique 19 présente ainsi une forme sensiblement hexagonale dont trois des sommets non adjacents sont fixés au pourtour externe du disque d'embrayage 17 encadrant sa face en engagement par friction avec le plateau d'embrayage 12 par trois boulons axiaux de fixation 21 et les trois autres sommets non adjacents sont fixés par trois autres boulons 23 à une paroi annulaire 22 concentrique au plateau d'embrayage 13 et solidaire du rotor 1 transversalement à son axe longitudinal X-X'.

Les deux plateaux d'embrayage 12, 13 sont pressés sur le disque d'embrayage 17 de part et d'autre de celui-ci par des vis 24 traversant des perçages lisses 25 du plateau d'embrayage 13, l'orifice central 17a du disque d'embrayage 17 et la membrane annulaire 19 de l'accouplement élastique, les vis 24 étant ancrées dans des trous taraudés de l'autre plateau d'embrayage intérieur 12. Les vis 24 pressent une rondelle du type Belleville 26 contre le plateau d'embrayage extérieur 13.

Chacun des plateaux d'embrayage 12, 13 est monté à rotation sur la partie d'extrémité 14a de l'arbre correspondant 14 par l'intermédiaire d'un roulement à billes 27, 28.

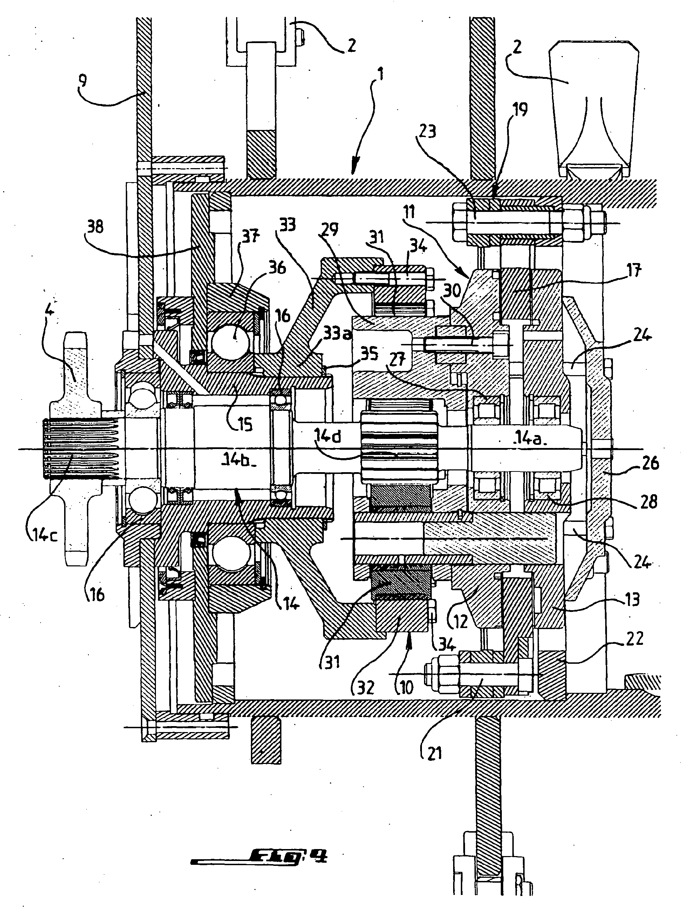

Le plateau d'embrayage interne 12 est solidaire du porte-satellite 29 du réducteur planétaire 10 par l'intermédiaire de vis axiales de fixation 30 dont une seule est représentée en figure 4.

Les trois pignons 31 du porte-satellite 29 sont en engrènement d'une part dans une couronne fixe intérieurement dentée de planétaire 32 et d'autre part avec un pignon 14d taillé sur l'arbre 14 qui constitue l'arbre central du réducteur planétaire traversant le porte-satellite 29.

La couronne 32 du réducteur planétaire 10 est fixée coaxialement à l'arbre 14 à un support 33 par l'intermédiaire de vis axiales de fixation 34. Le support 33 de la couronne 32 a sa partie centrale cylindrique 33a montée sur le palier cylindrique 15 en étant solidarisé à celui-ci par une liaison à cannelures 15a, 33b respectivement externes du palier 15 et internes de la partie centrale cylindrique 33a et un anneau d'arrêt 35 fixé à l'extrémité libre du palier cylindrique 15.

Chacune des extrémités du rotor 1 est montée à rotation relativement au flasque latéral correspondant 9 par l'intermédiaire d'un roulement à billes 36 dont la bague interne est solidaire d'une portée externe du palier 15 et la bague externe tourne solidairement d'une bague 37 elle-même solidaire d'une plaque circulaire 38 disposée dans l'extrémité du rotor 1 perpendiculairement à son axe longitudinal X-X' en étant solidarisée sur son pourtour externe à la face interne de ce rotor.

Le fonctionnement du rotor de l'invention ressort déjà de la description qui précède et va être maintenant expliqué.

L'entraînement des chaînes 3 provoque une rotation des deux arbres 14 relativement au flasque 9, chacun des arbres 14 entraînant en rotation le porte-satellite 29 relativement à la couronne fixe planétaire 32, lequel porte-satellite 29 entraîne en rotation le plateau d'embrayage 12 et, par conséquent, l'ensemble constitué par le disque d'embrayage 17, l'autre plateau d'embrayage 13, l'ensemble des pastilles 18, la rondelle Belleville 26 et l'accouplement élastique 19. De la sorte, la rotation de chacun des arbres 14 entraîne en rotation le rotor 1 par l'intermédiaire de chaque accouplement élastique 19.

Lorsque le rotor 1 est bloqué suite à un choc lors du travail de la terre, le surcouple créé amène les deux plateaux d'embrayage 12, 13 à glisser relativement au disque d'embrayage 17 et l'accouplement élastique 19 accuse ou encaisse le coup du choc et l'ensemble embrayage et accouplement élastique protège chacun à leur façon le porte-satellite 29 ainsi que tout le mécanisme se trouvant entre le plateau 12 et l'arbre d'entrée 8.

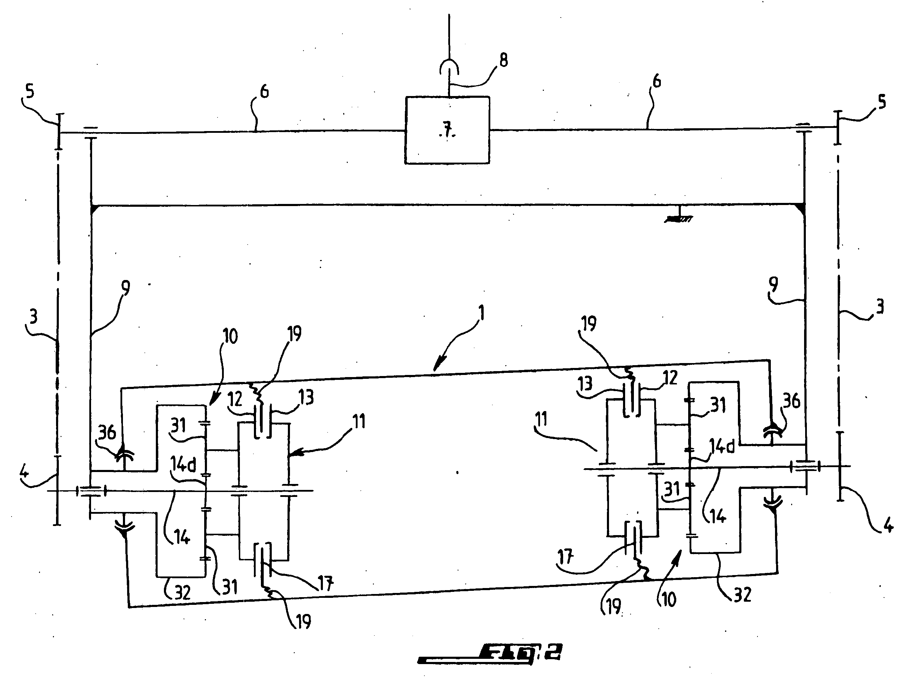

En outre, comme cela ressort de la figure 2, les deux accouplements élastiques 19 autorisent un désalignement de montage du rotor 1 suivant les trois axes orthogonaux de l'espace X, Y et Z sans interférer avec le mécanisme interne du rotor à réducteurs planétaires 10 et limiteurs de couple 11 dont les arbres de support 14 restent perpendiculaires aux flasques 9 de support du rotor 1.

## Revendications

1. Engin de travail du sol, tel qu'un malaxeur, comprenant un rotor (1) en forme générale de cylindre creux portant des outils (2) de travail du sol et dont chacune des extrémités est entraînée par au moins une chaîne de transmission (3) en prise avec pignon externe (4) couplé coaxialement au rotor (1), un limiteur de couple (11) interposé entre le rotor (1) et chacun des deux pignons (4), chacun des deux limiteurs de couple (11) étant réglé à une même valeur limite de couple telle que la somme des deux valeurs soit légèrement supérieure au couple nominal d'entraînement du rotor (1), et un réducteur planétaire (10) logé dans le rotor (1), **caractérisé en ce que** chaque limiteur de couple (11) est logé dans le rotor (1) et comprend deux plateaux d'embrayage (12,13) portés par un arbre (14) à pignon externe (4) d'entraînement du rotor (1) et pressés élastiquement en engagement par friction contre un disque d'embrayage (17) de part et d'autre de celui-ci, le disque d'embrayage (17) étant solidaire du rotor (1) par l'intermédiaire d'un accouplement élastique (19).

2. Engin de travail du sol selon la revendication 1, **caractérisé en ce que** l'un (12) des plateaux d'embrayage (12,13) est solidaire en rotation du porte satellite (29) du réducteur planétaire (10) dont les pignons planétaires (31) sont entraînés par un pignon interne (14d) de l'arbre (14) du rotor (1) et en engrènement dans une couronne fixe de planétaire (32).

3. Engin de travail du sol selon la revendication 2, **caractérisé en ce que** les deux plateaux d'embrayage (12,13) sont pressés contre le disque d'embrayage (17) par une rondelle Belleville (26) pressée contre l'autre plateau d'embrayage (13) par des vis (24) traversant des perçages lisses de l'autre plateau (13), le disque d'embrayage (17) et l'accouplement élastique (19), les vis (24) étant ancrées dans des trous taraudés du plateau d'embrayage (12) solidaire du porte satellite (29).

4. Engin de travail du sol selon l'une des revendications précédentes, **caractérisé en ce que** l'accouplement élastique (19) est solidarisé coaxialement d'une part au rotor (1) et d'autre part au disque d'embrayage (17) à un côté de ce dernier par des boulons axiaux de fixation (21,23).

5. Engin de travail du sol selon la revendication 4, **caractérisé en ce que** l'accouplement élastique (19) est en forme générale de couronne plate constituée par une succession de lamelles élastiques rectilignes métalliques (20), de préférence en acier, régulièrement espacées.

6. Engin de travail du sol selon l'une des revendications précédentes, **caractérisé en ce que** chaque arbre (14) d'entraînement du rotor (1) est monté à rotation à sa partie d'extrémité (14b) portant le pignon externe d'entraînement (4) dans un palier cylindrique de support (15) solidaire d'un flasque ou bras latéral (9) de support du rotor (1).

7. Engin de travail du sol selon la revendication 6, **caractérisé en ce que** la couronne (32) du réducteur planétaire (10) est fixée sur le palier cylindrique (15) de support de l'arbre d'entraînement (14) du rotor (1).

8. Engin de travail du sol selon la revendication 6 ou 7, **caractérisé en ce que** chaque extrémité du rotor (1) est montée à rotation au flasque ou bras de support (9) par un roulement à billes (36).

9. Engin de travail du sol selon l'une des revendications précédentes, **caractérisé en ce que** les plateaux d'embrayage (12,13), le disque d'embrayage (17) et l'accouplement élastique (19) sont disposés transversalement à l'arbre correspondant d'entraînement (14) du rotor (1).

10. Engin de travail du sol selon l'une des revendications précédentes, **caractérisé en ce que** les deux plateaux d'embrayage (12,13) sont montés à rotation sur l'arbre correspondant d'entraînement (14) du rotor (1) par des roulements à billes (27,28).

11. Engin de travail du sol selon l'une des revendications 2 à 10, **caractérisé en ce que** le plateau d'embrayage (12) est solidaire du porte satellite (29) par des vis axiales de fixation (34).

12. Engin de travail du sol selon l'une des revendications précédentes, **caractérisé en ce que** les deux arbres d'entraînement (14) du rotor (1) sont coaxiaux.

13. Engin de travail du sol selon l'une des revendications précédentes, **caractérisé en ce que** l'accouplement élastique (19) autorise un désalignement du rotor (1) suivant les trois axes orthogonaux (X,Y ;Z) de l'espace.

## Claims

1. Cultivation device, such as a mixer, comprising a rotor (1) in the general form of a hollow cylinder carrying cultivation tools (2), each end of which is entrained by at least one transmission chain (3) engaging with an external gear (4) coupled coaxially with the rotor (1), a torque limiter (11) interposed between the rotor (1) and each of the two gears (4), each of the two torque limiters (11) being set at one and the same torque limit value, such that the sum of the two values is slightly more than the nominal entrainment torque of the rotor (1), and a planetary reducing gear (10) housed in the rotor (1), **characterised in that** each torque limiter (11) is housed in the rotor (1) and comprises two flexibly pressed clutch cover plates (12, 13) carried by an entrainment shaft (14) of the rotor (1) with external gear (4), engaging by friction against a clutch disc (17) on both sides, the clutch disc (17) being integral with the rotor (1) by means of a flexible coupling (19).

2. Cultivation device according to claim 1, **characterised in that** one (12) of the clutch cover plates (12, 13) is integral in rotation with the planet carrier (29) of the planetary reducing gear (10), the planetary gears (31) of which are entrained by an internal gear (14d) of the shaft (14) of the rotor (1) and by meshing in a fixed crown gear of the planetary gear (32).

3. Cultivation device according to claim 2, **characterised in that** the two clutch cover plates (12, 13) are pressed against the clutch disc (17) by a Belleville washer (26) pressed against the other clutch cover plate (13) by screws (24) passing through smooth holes in the other plate (13), the clutch disc (17) and the flexible coupling (19), the screws (24) being anchored in holes tapped in the clutch cover plate (12), which is integral with the planet carrier (29).

4. Cultivation device according to one of the previous claims, **characterised in that** the flexible coupling (19) is coaxially integral with the rotor (1) on the one hand and on the other hand with one side of the clutch disc (17) by axial fixing bolts (21, 23).

5. Cultivation device according to claim 4, **characterised in that** the flexible coupling (19) is in the general form of a flat crown gear made up of a succession of regularly spaced metallic rectangular flexible sheets (20), preferably made of steel.

6. Cultivation device according to one of the previous claims, **characterised in that** at the end (14b) carrying the external entrainment gear (4) each entrainment shaft (14) of the rotor (1) is fitted in rotation in a cylindrical support bearing (15), which is integral with a flange or lateral support arm (9) of the rotor (1).

7. Cultivation device according to claim 6, **characterised in that** the crown gear (32) of the planetary reducing gear (10) is fixed on the cylindrical support bearing (15) of the entrainment shaft (14) of the rotor (1).

8. Cultivation device according to claim 6 or 7, **characterised in that** each end of the rotor (1) is fitted in rotation to the flange or support arm (9) by a ball bearing (36).

9. Cultivation device according to one of the previous claims, **characterised in that** the clutch cover plate (12, 13), the clutch disc (17) and the flexible coupling (19) are arranged crosswise to the corresponding entrainment arm (14) of the rotor (1).

10. Cultivation device according to one of the previous claims, **characterised in that** the two clutch cover plates (12, 13) are fitted in rotation on the corresponding entrainment shaft (14) of the rotor (1) by ball bearings (27, 28).

11. Cultivation device according to one of claims 2 to 10, **characterised in that** the clutch cover plate (12) is integral with the planet carrier (29) by axial fixing screws (34).

12. Cultivation device according to one of the previous claims, **characterised in that** the two entrainment shafts (14) of the rotor (1) are coaxial.

13. Cultivation device according to one of the previous claims, **characterised in that** the flexible coupling (19) permits a misalignment of the rotor (1) according to the three orthogonal axes (X, Y: Z) of the space.

## Patentansprüche

1. Bodenbearbeitungsmaschine, wie etwa ein Auflockerer, enthaltend einen hohlzylinderförmigen Rotor (1), der Bodenbearbeitungswerkzeuge (2) trägt und von dem jedes Ende über zumindest eine Übertragungskette (3) angetrieben wird, die mit einem koaxial an den Rotor (1) gekoppelten äußeren Zahnrad (4) in Eingriff steht, einen Drehmomentbegrenzer (11), der zwischen Rotor (1) und jedem der beiden Zahnräder (4) eingefügt ist, wobei jeder der beiden Drehmomentbegrenzer (11) auf einen gleichen Drehmomentgrenzwert eingestellt ist, so dass die Summe der beiden Werte geringfügig größer als das Antriebsnennmoment des Rotors (1) ist, und ein Planetenuntersetzungsgetriebe (10), das in dem Rotor (1) untergebracht ist, **dadurch gekennzeichnet, dass** jeder Drehmomentbegrenzer (11) in dem Rotor (1) untergebracht ist und zwei Kupplungsplatten (12, 13) aufweist, die von einer Welle (14) mit dem äußeren Zahnrad (4) zum Antreiben des Rotors (1) abgestützt werden und durch Reibschluss an eine Kupplungsscheibe (17) beiderseits der letztgenannten federnd angedrückt werden, wobei die Kupplungsscheibe (17) über eine Federkupplung (19) fest mit dem Rotor (1) verbunden ist.

2. Bodenbearbeitungsmaschine nach Anspruch 1, **dadurch gekennzeichnet, dass** eine (12) der Kupplungsplatten (12, 13) drehfest mit dem Satellitenträger (29) des Planetenuntersetzungsgetriebes (10) verbunden ist, dessen Planetenräder (31) über ein inneres Zahnrad (14d) der Welle (14) des Rotors (1) angetrieben werden und mit einem Planetengetriebehohlrad (32) kämmen.

3. Bodenbearbeitungsmaschine nach Anspruch 2, **dadurch gekennzeichnet, dass** die beiden Kupplungsplatten (12, 13) an die Kupplungsscheibe (17) über eine Tellerfeder (26) angedrückt werden, die über Schrauben (24) an die weitere Kupplungsplatte (13) angedrückt wird, welche sich durch glatte Bohrungen der weiteren Platte (13), die Kupplungsscheibe (17) und die Federkupplung (19) erstrecken, wobei die Schrauben (24) in Gewindebohrungen der Kupplungsplatte (12) verankert sind, die fest mit dem Satellitenträger (29) verbunden ist.

4. Bodenbearbeitungsmaschine nach einem der vorangehenden Ansprüche, **dadurch gekennzeichnet, dass** die Federkupplung (19) einerseits mit dem Rotor (1) und andererseits mit der Kupplungsscheibe (17) auf einer Seite der letztgenannten über axiale Befestigungsbolzen (21, 23) koaxial verbunden ist.

5. Bodenbearbeitungsmaschine nach Anspruch 4, **dadurch gekennzeichnet, dass** die Federkupplung (19) in Form eines flachen Kranzes vorliegt, der aus einer Folge von geradlinigen Federlamellen (20) aus Metall, vorzugsweise aus Stahl, besteht, die gleichmäßig beabstandet sind.

6. Bodenbearbeitungsmaschine nach einem der vorangehenden Ansprüche, **dadurch gekennzeichnet, dass** jede Welle (14) zum Antreiben des Rotors (1) an ihrem das äußere Antriebsrad (4) abstützenden Endabschnitt (14b) in einem zylindrischen Traglager (15) drehbar gelagert ist, das fest mit einem Seitenflansch bzw. -arm (9) zum Abstützen des Rotors (1) verbunden ist.

7. Bodenbearbeitungsmaschine nach Anspruch 6, **dadurch gekennzeichnet, dass** das Hohlrad (32) des Planetenuntersetzungsgetriebes (10) an dem zylindrischen Lager (15) zum Abstützen der Antriebswelle (14) des Rotors (1) befestigt ist.

8. Bodenbearbeitungsmaschine nach Anspruch 6 oder 7, **dadurch gekennzeichnet, dass** jedes Ende des Rotors (1) über ein Kugellager (36) am Tragflansch bzw. -arm (9) drehbar gelagert ist.

9. Bodenbearbeitungsmaschine nach einem der vorangehenden Ansprüche, **dadurch gekennzeichnet, dass** die Kupplungsplatten (12, 13), die Kupplungsscheibe (17) und die Federkupplung (19) quer zur entsprechenden Antriebswelle (14) des Rotors (1) angeordnet sind.

10. Bodenbearbeitungsmaschine nach einem der vorangehenden Ansprüche, **dadurch gekennzeichnet, dass** die beiden Kupplungsplatten (12, 13) über Kugellager (27, 28) an der entsprechenden Antriebswelle (14) des Rotors (1) drehbar gelagert sind.

11. Bodenbearbeitungsmaschine nach einem der Ansprüche 2 bis 10, **dadurch gekennzeichnet, dass** die Kupplungsplatte (12) über axiale Befestigungsschrauben (34) fest mit dem Satellitenträger (29) verbunden ist.

12. Bodenbearbeitungsmaschine nach einem der vorangehenden Ansprüche, **dadurch gekennzeichnet, dass** die beiden Antriebswellen (14) des Rotors (1) koaxial verlaufen.

13. Bodenbearbeitungsmaschine nach einem der vorangehenden Ansprüche, **dadurch gekennzeichnet, dass** die Federkupplung (19) eine Auslenkung des Rotors (1) in den drei orthogonalen Raumachsen (X, Y; Z) gestattet.
